# EUROPÄISCHE PATENTSCHRIFT

(11) **EP 0 876 201 B1**
(45) Veröffentlichungstag und Bekanntmachung des Hinweises auf die Patenterteilung: **15.09.1999**
(21) Anmeldenummer: 97906998.6
(22) Anmeldetag: 09.01.1997
(51) Int. Cl.: B01J 8/06

(54) **VERFAHREN ZUR DURCHFÜHRUNG EINER ENDOTHERMEN REAKTION UND REAKTOR ZUR DURCHFÜHRUNG DES VERFAHRENS**
METHOD OF CARRYING OUT AN ENDOTHERMIC REACTION AND A REACTOR FOR CARRYING OUT THE METHOD
PROCEDE DE REALISATION D'UNE REACTION ENDOTHERMIQUE ET REACTEUR PERMETTANT DE METTRE EN OEUVRE LEDIT PROCEDE

(30) Priorität: 12.01.1996 IT RM960018
(43) Veröffentlichungstag der Anmeldung: 11.11.1998
(73) Patentinhaber: MANNESMANN Aktiengesellschaft, 40213 Düsseldorf (DE); K.T.I. Group B.V., NL-2700 AB Zoetermeer (NL)
(72) Erfinder: GIACOBBE, Francesco, I-00147 Rom (IT); VILLANTE, Raffaele, I-00139 Rom (IT); LOIACONO, Olimpia, I-00143 Rom (IT)
(74) Vertreter: Meissner, Peter E., Dipl.-Ing.
(86) Internationale Anmeldenummer: DE9700057
(87) Internationale Veröffentlichungsnummer: WO9726985

(56) Entgegenhaltungen:
- EP-A- 0 194 067
- WO-A-95/11745
- DE-A- 2 848 014
- FR-A- 1 327 210
- GB-A- 2 201 903

## Beschreibung

Gegenstand dieser Erfindung ist ein Verfahren zur Durchführung einer endothermen Reaktion gemäß dem Gattungsbegriff des Patentanspruchs 1 sowie ein Reaktor zur Durchführung dieses Verfahrens gemäß dem Gattungsbegriff des Patentanspruchs 10.

Diese bei hohen Temperaturen ablaufenden Reaktionen zeichnen sich aus durch erhöhte Wärmeaufnahme am Anfang des Reaktionsbereiches und durch einen exponentiell abnehmenden Wärmebedarf. Normalerweise werden ca. 57% der Reaktionswärme in den ersten 25% der katalytischen Schicht aufgenommen, während ca. 23% in den zweiten 25% der katalytischen Schicht und die verbleibenden 20% der Reaktionswärme in der zweiten Hälfte der katalytischen Schicht aufgenommen werden.

Ebenso ist bekannt, daß die idealen Bedingungen für den Ablauf der katalytischen Reaktion bei einem Wärmeaustausch mit konstant gehaltener Temperatur liegen, wodurch bei Aufrechterhaltung der gewünschten Arbeitsbedingungen, die Reaktionsgeschwindigkeit und der durch sie ausgelöste Thermoeffekt ausgeglichen werden können, um sich den Planungswerten so weit wie möglich anzunähern und damit einen optimalen Wirkungsgrad des Reaktors zu erreichen.

Derzeit sind im wesentlichen zwei katalytische Reaktoren für endotherme Reaktionen bei hohen Temperaturen bekannt. Während der erste Bautyp eine direkte Einwirkung der in einem Brenner erzeugten Flammen bzw. des erzeugten heißen Rauchgases auf die Katalysatorrohre vorsieht, erfolgt der Wärmeaustausch beim zweiten Bautyp über den Einsatz eines Stroms geschmolzener Salze oder über andere ähnliche Methoden.

Beide Lösungen sind allerdings nicht ganz zufriedenstellend und besitzen mehrere Nachteile. So lassen sich bei direkter Flammenbeheizung praktisch keine hohen Betriebstemperaturen erreichen, ohne das Risiko lokaler Überhitzung einzugehen mit Bildung von heißen Punkten und nachfolgendem Cracking der Reaktionsmittel, Kohlenstoffbildung und Deaktivierung des Katalysators. Die endothermen Reaktoren mit geschmolzenen Salzen sind, abgesehen von den hohen Kosten, auch insofern schwierig zu kontrollieren, als die Gefahr von unzulässigen Geschwindigkeitsabnahmen und Unterbrechungen des flüssigen Massenstroms permanent bestehen bleibt.

Aus der WO 95/11745 ist ein katalytischer Reaktor für endotherme Reaktionen bekannt, der eine mit nicht-adiabatischen Brennern bestückte Strahlungskammer aufweist, in die von oben ein oder mehrere in einer gemeinsamen Ebene angeordnete Katalysatorrohre mit zumindest einem Teil ihrer Länge hineinragen. Die Katalysatorrohre sind jeweils mit Abstand von einem koaxialen Wärmemantelrohr umgeben, so daß die Flammen der Brenner nicht direkt mit den Wänden der Katalysatorrohre in Kontakt treten. Das bei der Verbrennung erzeugte heiße Rauchgas kann von unten jeweils in den zwischen dem Katalysatorrohr und dem zugehörigen Wärmemantelrohr gebildeten Ringspalt eintreten, streicht an der Außenoberfläche des Katalysatorrohres entlang unter Abgabe von Wärme an den durch das Katalysatorrohr geführten Prozeßgasstrom für die katalytische Reaktion und wird nach der Wärmeabgabe am oberen Ende des Wärmemantelrohres abgezogen. Während der Durchströmung des Ringspaltes kann das Wärme abgebende Rauchgas gleichzeitig aber auch seinerseits Wärme von dem in den Brennern frisch erzeugten Rauchgas durch die gut wärmeleitende Wand des Wärmemantelrohres aufnehmen. Beide Teilstücke des Rauchgasstromes sind zueinander gegenläufig. Die einzelnen Katalysatorrohre weisen in ihrem Innern jeweils ein koaxial angeordnetes Steigrohr auf, durch welches das durch die Reaktion gebildete Produkt (und ggf. auch nicht reagierte Reste des Prozeßgases) von unten nach oben aus dem Katalysatorrohr abgezogen werden kann. Die Katalysatorfüllung befindet sich hierbei in dem Ringspalt zwischen der Wand des jeweiligen Katalysatorrohres und der Wand des koaxialen Steigrohres. Da das Steigrohr eine wärmeleitende Wand aufweist, kann beim Abziehen des erzeugten Produktstromes durch die Wand des Steigrohres auch von dem heißen Produktstrom Wärme an das gegenläufig vorbeiströmende Prozeßgas abgegeben werden.

Ferner ist aus der EP 0 369 556 B ein Reaktor für endotherme katalytische Reaktionen bekannt, bei denen die Katalysatorrohre wiederum in eine Strahlungskammer von oben hineinragen. Zur Beheizung der Reaktion ist eine außerhalb der Strahlungskammer angeordnete Brennereinrichtung vorgesehen, deren heiße Verbrennungsgase in den unteren Teil der Strahlungskammer eingeführt werden. Zur Vermeidung örtlicher Überhitzungen ist hierbei am unteren Ende der Katalysatorrohre ein nach unten offenes Wärmemantelrohr vorgesehen, dessen Wirkung insoweit weitgehend derjenigen des Reaktors gemäß WO 95/11745 entspricht. Auch hier strömt das Wärme an den Prozeßgasstrom abgebende heiße Rauchgas gegenläufig zum Prozeßgas.

Schließlich ist in der EP 0 195 688 A2 ein Reaktor zur Dampfreformierung beschrieben, der eine Vielzahl von koaxial ineinander geschachtelten zylindrischen Trennwänden aufweist, die mehrere Ringräume voneinander trennen, die entweder von einem Prozeßgas- bzw. Produktstrom oder von einem heißen Rauchgasstrom zwecks Wärmeaustausch durchströmt werden. Das heiße Rauchgas wird durch einen im Bereich der Reaktorlängsachse, also zentral angebrachten Brenner erzeugt und zunächst durch ein Wärmemantelrohr geführt, bevor es in Wärmeaustauschkontakt mit der ersten Trennwand tritt, die den katalysatorgefüllten Reaktionsraum für das Prozeßgas von dem Rauchgasstrom trennt. Hierbei strömt das Rauchgas zunächst gleichläufig zum Prozeßgasstrom und nach einer Richtungsumlenkung anschließend gegenläufig zum frisch zugeführten Prozeßgas.

Bei diesen bekannten Reaktoren werden lokale Überhitzungen der Katalysatorrohre zwar weitgehend vermieden. Allerdings bestehen noch Verbesserungswünsche im Hinblick auf die Wärmeübertragung auf das Prozeßgas, um einen bezüglich der eingangs beschriebenen thermischen Effekte verbesserten und optimal wirksamen Reaktor zu erhalten.

Aufgabe der Erfindung ist es, die geschilderten Nachteile zu überwinden und ein Verfahren sowie einen hochleistungsfähigen Reaktor zu dessen Durchführung vorzuschlagen, mit dem endotherme, insbesondere katalytische Reaktionen bei hohen Temperaturen durchführbar sind, wobei der Rückgriff auf geschmolzene Salze oder ähnliches zur Beheizung der Reaktion nicht erfolgen und auch ein örtliches Überhitzen der Reaktorrohre ausgeschlossen werden soll. Die endotherme Reaktion soll dabei unter nahezu isothermen Bedingungen, die den optimalen Planungswerten weitgehend entsprechen, ablaufen können. Der dabei erfolgende Warmeaustausch soll dem Warmebedarf der jeweiligen endothermen Reaktion entsprechen.

Bei einem gattungsgemäßen Verfahren wird diese Aufgabe mit den kennzeichnenden Merkmalen des Patentanspruchs 1 gelöst und durch die kennzeichnenden Merkmale der Unteransprüche 2 bis 9 in vorteilhafter Weise weitergebildet. Ein erfindungsgemäßer Reaktor zur Durchführung dieses Verfahrens weist die im Anspruch 10 angegebenen Merkmale auf. Durch die kennzeichnenden Merkmale der Unteransprüche 11 bis 24 ergeben sich besonders bevorzugte Ausführungsformen dieses Reaktors.

Die nachfolgende Beschreibung der Erfindung orientiert sich weitgehend an der Zugrundelegung einer katalytischen endothermischen Reaktion, wenngleich die Erfindung hierauf nicht eingeschränkt sein soll.

Die Erfindung geht aus von einer endothermen, insbesondere katalytischen Reaktion, bei der die Beheizung eines Prozeßgasstroms (d.h. der Reaktanten) in einem Reaktionsraum auf indirektem Wege erfolgt. Der Prozeßgasstrom wird dabei an einem Ende des Reaktionsraums eingeführt und durchströmt die gesamte Länge dieses Reaktionsraums. Die Wände des Reaktionsraums werden von einem heißen Rauchgas an ihrer Außenoberfläche umströmt, so daß das Rauchgas durch die Wand des Reaktionsraums Wärme an den Prozeßgasstrom abgibt. Gleichzeitig nimmt das im Wärmeaustauschkontakt zum Prozeßgasstrom stehende Rauchgas seinerseits Wärme von dem frisch zugeführten heißen Rauchgas das durch eine Verbrennung entstanden ist. Dieser Wärmeaustausch zwischen dem Wärme abgebenden Rauchgas und dem frisch zugeführten Rauchgas erfolgt auf indirektem Wege. Der Wärmeaustausch zwischen dem Prozeßgasstrom und dem Rauchgas erstreckt sich praktisch über die gesamte Länge des Reaktionsraums. Wesentliches Kennzeichen des erfindungsgemäßen Verfahrens ist es, daß die beiden Wärmeaustauschvorgänge einerseits zwischen dem heißen Rauchgas und dem Prozeßgasstrom und andererseits zwischen dem frisch zugeführten heißen Rauchgas und dem im Wärmeaustauschkontakt mit dem Prozeßgasstrom stehenden Rauchgas jeweils im Gleichstrom erfolgen. Soweit bei den bekannten Verfahren ein indirekter Wärmeaustausch zwischen den einzelnen Abschnitten des Strömungsweges des zur Beheizung eingesetzten Rauchgases vorgesehen ist, erfolgt dieser stets nach dem Gegenstromprinzip. Durch diese Maßnahme wird dem Umstand Rechnung getragen, daß der gerade am Anfang des Reaktionsraums erforderliche hohe Wärmebedarf in optimaler Weise befriedigt wird, ohne daß eine Gefährdung durch heiße Stellen an den Reaktorrohren zu befürchten ist.

Es empfiehlt sich, den Prozeßgasstrom nach vollständigem oder nahezu vollständigem Abschluß der endothermen Reaktion, also den gebildeten heißen Produktgasstrom im Gegenstrom mit dem frisch zugeführten Prozeßgasstrom in indirekten Wärmeaustauschkontakt zu bringen, so daß die enthaltene Wärme im Produkt, das durch die Reaktion erzeugt wurde, ebenfalls zur Wärmelieferung an den Reaktionsraum zur Verfügung steht. In vielen Fällen empfiehlt es sich, den Wärmeaustausch zwischen dem frisch zugeführten heißen Rauchgas und dem bereits im Wärmeaustauschkontakt mit dem Prozeßgasstrom stehenden Rauchgas nur auf eine im Bereich der Prozeßgaszuführung beginnende Teillänge des Reaktionsraums zu beschränken, also über den restlichen Längenbereich des Reaktionsraums von einer Nachheizung des im Wärmeaustauschkontakt stehenden Rauchgases abzusehen. Es empfiehlt sich, diese Nachheizung des Rauchgasstromes auf eine Teillänge zwischen 40 und 85 %, insbesondere zwischen 60 bis 80 % der Gesamtlänge des Reaktionsraums zu begrenzen.

Die Verbrennung zur Erzeugung des als Heizmedium eingesetzten Rauchgases wird vorzugsweise in einem örtlich vom Bereich der stattfindenden Wärmeaustauschvorgänge entfernten Bereich durchgeführt. Zweckmäßigerweise sollte dies also nicht wie bei dem Reaktor gemäß EP 0 195 688 A2 in unmittelbarer Nähe des Reaktionsraums erfolgen. Dies bringt Vorteile im Hinblick auf eine Vergleichmäßigung der Temperatur in dem frisch zugeführten Rauchgasstrom mit sich und erleichtert die thermische Regelung des Prozesses. Mit Vorteil wird das Rauchgas in einer adiabatischen Verbrennung möglichst bei einem Druck erzeugt, der nur geringfügig über dem Umgebungsdruck (also deutlich unter 2 bar absolut) liegt. Als zweckmäßig hat es sich herausgestellt, das nach dem Wärmeaustausch mit dem Prozeßgasstrom deutlich abgekühlte Rauchgas bei etwa Umgebungsdruck aus den Wärmeaustauschzonen abzusaugen und aus dem Verfahren auszuschleusen. Da das abgekühlte Rauchgas dennoch eine erhebliche Menge an Restwärme enthält, sieht eine zweckmäßige Ausführungsform des erfindungsgemäßen Verfahrens vor, diese Restwärme vor der Ausschleusung des Rauchgases aus dem Verfahren zur Vorerwärmung des eingesetzten Prozeßgasstroms oder ggf. auch eines anderen Medienstromes durch indirekten Wärmeaustausch in einer Konvektionszone zu nutzen. Weiterhin hat es sich als sehr vorteilhaft erwiesen, einen Teilstrom des abgesaugten Rauchgases (zweckmäßigerweise nach einer Wärmeauskopplung in der Konvektionszone) abzuzweigen und in die Verbrennung zurückzuführen. Dies hat nicht nur Vorteile im Hinblick auf eine Minimierung der Schadstoffemission bei der Ableitung des abgekühlten Abgases, sondern ermöglicht auch eine sehr einfache und zuverlässige Regelung der Rauchgastemperatur, um diese im jeweils optimalen Bereich zu halten.

Ein Reaktor zur Durchführung des erfindungsgemäßen Verfahrens weist mindestens ein vertikales Reaktorrohr auf, dessen oberes Ende an eine Prozeßgaszuleitung angeschlossen ist und eine Produktableitung zur Abführung des ganz oder teilweise zum gewünschten Produkt ausreagierten Prozeßgasstroms auf. Die Produktableitung ist jeweils derart angeordnet, daß die gesamte Länge des Reaktorrohres vom Prozeßgas durchströmbar ist. Alle Reaktorrohre sind jeweils über im wesentlichen ihre gesamte Länge unter Belassung eines ersten Ringspalts mit Abstand von einem koaxial angeordneten Wärmemantelrohr aus einem Material mit guter Wärmeleitfähigkeit (z.B. zunderbeständiger, hochwarmfester Stahl) umgeben. Weiterhin beinhattet der Reaktor in an sich bekannter Weise eine Strahlungskammer aus Feuerfestmaterial, die das bzw. die Wärmemantelrohre mindestens über eine Teillänge der jeweils in diesen eingeschlossenen Reaktorrohre außen umgibt. Am oberen Ende der Strahlungskammer ist eine Heißgaszuleitung für die Einleitung von heißem Rauchgas vorgesehen. Durch eine Rauchgasableitung kann das abgekühlte Rauchgas aus der Strahlungskammer abgeführt werden. Wesentliches Kennzeichen des erfindungsgemäßen Reaktors ist es, daß die Rauchgasableitung, die aus einer oder mehreren einzelnen Leitungen gebildet ist, am unteren Ende aus der Strahlungskammer herausführt, daß die einzelnen Wärmemantelrohre mit ihren oberen Enden jeweils an mindestens eine der Leitungen der Rauchgasableitung angeschlossen sind und daß die Warmemantelrohre an ihren unteren Enden einen Anschluß für die Ableitung von abgekühltem Rauchgas aufweisen. Um die Wärme des durch die endotherme Reaktion erzeugten Produktes zur Beheizung des Prozeßgasstroms nutzen zu können, weist vorteilhafterweise jedes Reaktorrohr im Inneren ein Steigrohr auf, das sich unter Belassung eines zweiten Ringspalts zwischen dem Reaktorrohr und dem Steigrohrjeweils koaxial über im wesentlichen die gesamte Länge des Reaktorrohrs erstreckt. In diesem Fall wird das Reaktorrohr nicht streng in einer Richtung durchströmt, sondern ist an seinem unteren Ende durch einen Boden dicht verschlossen. Das Steigrohr endet offen mit geringem Abstand über diesem Boden und ist in der Nähe des oberen Endes des Reaktorrohres zur Produktableitung aus diesem herausgeführt. Im Falle einer katalytischen endothermen Reaktion wird die Katalysatorfüllung im Bereich des zweiten Ringspalts, also zwischen dem Steigrohr und der Wand des Reaktorrohrs angeordnet.

Wenn die vorstehend beschriebene Nachheizung des in Wärmeaustauschkontakt mit dem Produktgasstrom stehenden Rauchgases nur auf einer Teillänge des Reaktors erfolgen soll, empfiehlt es sich, die Reaktorrohre nach unten aus der Strahlungskammer herausragen zu lassen. Dieser überkragende Teil der Reaktorrohre weist zweckmäßigerweise eine zwischen 15 und 60 % der Reaktorrohrlänge liegende Länge auf. Im Regelfall empfiehlt es sich, mehrere parallele Reaktorrohre vorzusehen, die jeweils von einem Wärmemantelrohr in der beschriebenen Weise umgeben sind. Zweckmäßigerweise sollten die Reaktorrohre mit ihren Längsachsen in einer gemeinsamen Ebene liegen, wobei zu jedem Wärmemantelrohr jeweils ein zu dieser Ebene spiegelsymmetrisch angeordnetes Paar von Leitungen der Rauchgasableitung führt. Der Durchmesser dieser Leitungen sollte zur Erzielung einer möglichst gleichmäßigen Rauchggasströmung in allen Mantelrohren auf die Einstellung eines konzentrierten, d.h. insbesondere in der Rauchgasableitung merklichen Druckverlustes ausgelegt sein, damit Kurzschlußströmungen vermieden werden. Zweckmäßigerweise wird die zur Erzeugung der zur Beheizung benötigten heißen Rauchgase erforderliche Brennereinrichtung außerhalb der Strahlungskammer angeordnet und über eine Rauchgasableitung an die Heißgaszuleitung des Reaktors angeschlossen. Vorzugsweise ist eine adiabatische Brennereinrichtung vorgesehen. Im Hinblick auf die Gestaltung der Heißgaszuleitung hat es sich als zweckmäßig erwiesen, diese in Form eines Verteilkanals, vorzugsweise eines als Bestandteil der feuerfesten Wandung der Strahlungskammer ausgebildeten Verteilkanals, auszuführen und zur gleichmäßigen Verteilung des heißen Rauchgases dieses über eine Reihe von Düsen in das Innere der Strahlungskammer zu führen.

Die Leitungen der Rauchgasableitung sollten zweckmäßigerweise außerhalb der Strahlungskammer verlaufen, wenngleich sie beispielsweise auch in der Wand der Strahlungskammer verlegt sein könnten. Der Durchmesser und die Länge der Wärmemantelrohre sowie die Länge des innerhalb der Strahlungskammer liegenden Teils der Wärmemantelrohre sollten zweckmäßigerweise derart aufeinander abgestimmt sein, daß der durch die Wände der Reaktorrohre übertragene Wärmestrom eine im wesentlichen konstante Temperatur im Reaktionsbereich des Prozeßgasstroms gewährleistet. Mit Vorteil sind die Ableitungen der Wärmemantelrohre zum Absaugen des abgekühlten Rauchgases an eine Ventilationseinrichtung angeschlossen, deren Ausgang sich in eine zu einem Kamin führende Abgasableitung und in eine Abgasrückführleitung verzweigt, durch die eine Abgasteilmenge in die Brennereinrichtung rückführbar ist. Im Interesse einer optimalen Energieausnutzung empfiehlt es sich weiterhin, zwischen den Ableitungen für das abgekühlte Rauchgas an den Wärmemantelrohren und der Abgasableitung einen als Konvektionszone ausgebildeten Wärmetauscher vorzusehen, der zur Vorwärmung des eingesetzten Prozeßgasstroms oder eines anderen Medienstroms dient. Für die Zuführung von Verbrennungsluft zu der eingesetzten Brennereinrichtung wird zweckmäßig ein Gebläse vorgesehen. Soweit der Reaktor für eine katalytische Reaktion ausgelegt werden soll, empfiehlt es sich, die einzelnen Reaktorrohre an ihrem oberen Ende mit einem durch einen abnehmbaren Deckel verschließbaren Flansch zu versehen, um das Einsetzen und Herausnehmen der Katalysatorfüllung im Reaktorrohr zu erleichtern.

Durch diese Erfindung wurden folgende Vorteile erreicht:
- Übereinstimmung des Wärmestroms mit der Reaktionsentwicklung bei praktisch isothermen Bedingungen;
- Umgehung des Problems des Kontaktes der Brennerflamme mit den Reaktorrohren und der Bildung heißer Punkte an deren Wänden,
- Reduktion der Stickoxydbildung im adiabatischen Brenner durch teilweise Rückführung der Verbrennungsgase,
- begrenzter Einsatz von Feuerfestmaterial nur für die Strahlungskammer,
- genaue Kontrolle der Temperatur der Reaktorrohre bei Austritt des Produktes durch Wärmeaustausch im Gleichstrom,
- erhöhte thermische Effizienz durch Leitung der eine gegenüber der Reaktionstemperatur leicht höhere Temperatur aufweisenden Rauchgase zu einer Konvektionszone.

Die Erfindung wird nachfolgend anhand der Zeichnung, die exemplarisch eine bevorzugte Ausführungsform der Erfindung darstellt, näher beschrieben: Es zeigen:
- Fig. 1: einen schematischen Axialschnitt eines Katalysatorrohres gemäß der Erfindung,
- Fig. 2: einen schematischen Querschnitt eines Reaktors gemäß der Erfindung,
- Fig. 3: ein schematisches Verbrennungssystem eines Reaktors gemäß der Erfindung.

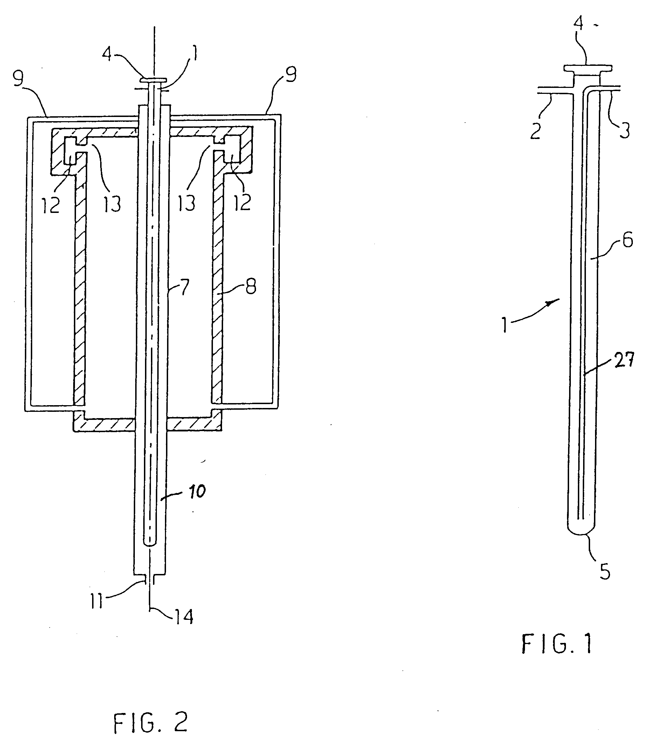

In Fig. 1 ist ein vertikales als Katalysatorrohr ausgebildetes zylinderförmiges Reaktorrohr 1 dargestellt, das im Bereich seines oberen Endes mit einer Prozeßgaszuleitung 2 für den Einlaß des zu behandelnden Prozeßgases sowie gegenüberliegend mit dem äußeren Endstück (Produktableitung 3) eines zylindrischen Steigrohres 27 für den Austritt des erzeugten Produktes ausgestattet ist. Das Steigrohr 27 verläuft koaxial im Innern des Reaktorrohres 1 bis in den Nahbereich eines Bodens 5 des Reaktorrohrs 1. Am Reaktorrohr 1 ist ein Flansch mit einem Deckel 4 vorgesehen, der lösbar am oberen Ende des Reaktorrohrs 1 befestigt ist. Wie aus Fig. 1 zu ersehen ist, befindet sich zwischen dem Steigrohr 27 und der Innenwand des Reaktorrohrs 1 ein Ringspalt 6 für die Unterbringung des Katalysators, der über den abnehmbaren Deckel 4 leicht eingesetzt und wieder herausgenommen werden kann. Der Querschnitt der Katalysatorfüllung ist somit ringförmig ausgebildet.

In Fig. 2 ist das Reaktorrohr 1 bis auf Höhe der besagten Prozeßgaszuleitung 2 und der Produktableitung 3 im Innern eines koaxialen zylinderförmigen Wärmemantelrohrs 7 eingeschlossen. Dieses Wärmemantelrohr 7 ist oben durch eine obere Wand abgeschlossen, während es nach außen über eine Ableitung 11, die in seinem unteren Boden eingearbeitet ist, offen ist für die Ableitung der abgekühlten Rauchgase. Das Wärmemantelrohr 7 ist über einen Teil seiner Länge von einer aus Feuerfestmaterial gebildeten Strahlungskammer 8 in Form eines Behälters eingeschlossen. Über eine Heißgaszuleitung 12, die im oberen Teil der Strahlungskammer 8 als integraler Bestandteil der Wandung der Strahlungskammer 8 im Sinne eines Verteilkanals ausgebildet ist und über zahlreiche Düsen 13 zum Inneren der Strahlungskammer 8 offen ist, kann das heiße Rauchgas gleichmäßig verteilt in die Strahlungskammer 8 eingeleitet werden. Aus dem unteren Teil der Strahlungskammer führen symmetrisch zu einer Symmetrieebene 14, die senkrecht auf der Darstellungsebene steht, angeordnete Leitungen einer Rauchgasableitung 9 heraus, verlaufen außerhalb der Strahlungskammer 8 nach oben und münden schließlich im Bereich seines oberen Endes in das Wärmemantelrohr 7. Überlicherweise weist der erfindungsgemäße Reaktor mehrere parallel zueinander angeordnete Wärmemantelrohre 7 auf, deren Längsachsen jeweils innerhalb der Symmetrieebene 14 liegen. Das bzw. die Wärmemantelrohre 7 ragen zusammen mit dem jeweils eingeschlossenen Reaktorrohr 1 mit einem Teil ihrer Länge nach unten aus der Strahlungskammer 8 heraus. Die Reaktorrohre 1 sind koaxial in den Wärmemantelrohren 7 angeordnet, so daß im Inneren der Wärmemantelrohre 7 jeweils ein Ringspalt 10 besteht, durch den das durch die Leitungen der Rauchgasableitung 9 eingeführte Rauchgas nach unten zur Ableitung 11 strömen kann.

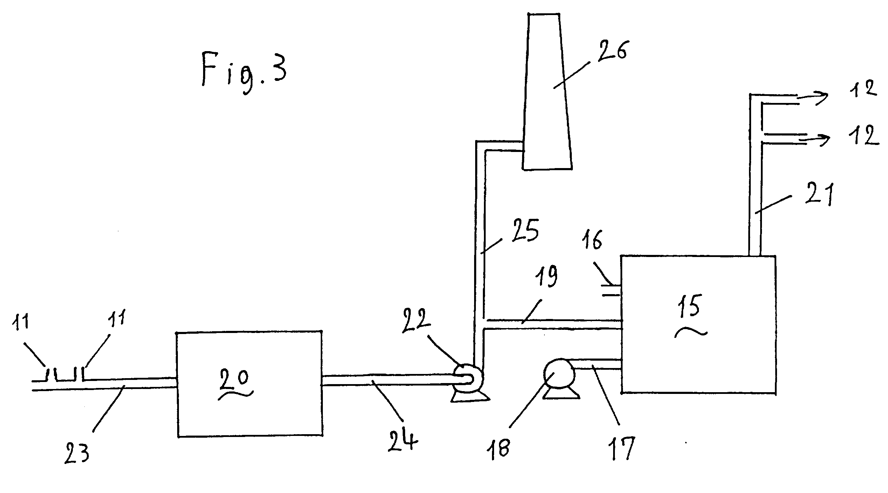

Fig. 3 zeigt eine adiabatische Brennereinrichtung 15 außerhalb der Strahlungskammer 27. Die Brennereinrichtung 15 verfügt an den Seiten über eine Brennstoffleitung 16 für den Brennstoff und eine Verbrennungsluftzuführung 17 für die aus einem Gebläse 18 kommende Verbrennungsluft sowie über eine vertikale Rauchgasableitung 21 für die Weiterleitung der heißen Verbrennungsgase an die Heißgaszuleitung 12 für das Einlassen der Gase in die Strahlungskammer 8. Im Abbildungsschema ist ebenfalls die Position einer Konvektionszone 20 vermerkt, in der die Warme der Rauchgase, die aus einer mit den bereits beschriebenen Ableitungen 11 verbundenen Leitung 23 einströmen, z.B. zur Vorwärmung des Prozeßgases genutzt wird. Im Anschluß an die Konvektionszone 20 werden die abgekühlten Verbrennungsgase über eine Leitung 24 bis zu einer Absaugeinrichtung 22 (Ventilator) geleitet. Stromabwärts der Absaugeinrichtung 22 kann ein Teilstrom des abgesaugten abgekühlten Rauchgases über eine Abgasrückführleitung 19 zur Brennereinrichtung 15 zurückgeführt werden, während der restliche Abgasstrom über eine Abgasableitung 25 und einen daran angeschlossenen Kamin 26 in die Atmosphäre abgegeben werden kann.

Der erfindungsgemäße Reaktor funktioniert wie folgt: Das Prozeßgas (z.B. Äthylbenzol-Dämpfe) tritt durch die Prozeßgaszuleitung 2 ein, wird in den Ringspalt 6 des Reaktorrohrs 1 geleitet und durchfließt den im Ringspalt 6 angeordneten Katalysator von oben nach unten. Das katalysierte Produkt, z.B. Styrol, wird durch das Steigrohr 27 nach oben geführt und tritt aus der Produktableitung 3 aus. Wie aus dem Schema der Fig. 3 zu ersehen werden die aus der Brennereinrichtung 15 kommenden heißen Rauchgase über die Rauchgasableitung 21 bis zu der in Fig. 2 dargestellten Heißgaszuleitung 12 geführt, vonwoaus sie über die Düsen 13 gleichmäßig im Innern der Strahlungskammer 8 verteilt werden. Im Inneren der Strahlungskammer 8 werden die Rauchgase von oben nach unten geleitet, strömen in die Leitungen der Rauchgasableitung 9, dringen von oben in das Innere der Wärmemantelrohre 7 ein und strömen dann erneut nach unten in den Ringspalt 10 zwischen der Innenwand der Wärmemantelrohre 7 und der Außenwand der Reaktorrohre 1, bis sie über die Leitungen der Ableitung 11 austreten, über die sie schließlich auf die bereits beschriebene Weise zur Konvektionszone 20 geführt werden. Bei der gemäß der Erfindung angenommenen Lösung tauschen die Rauchgase, die in den Ringspalt 10 zwischen den einzelnen Wärmemantelrohren 7 und den entsprechenden Katalysatorrohren 1 strömen, über die Wand der Katalysatorrohre 1 Wärme im Gleichstrom mit den in den Katalysatorrohren 1 enthaltenen Prozeßgasen aus. Beide Ströme werden von oben nach unten gelenkt. Gleichzeitig nehmen diese Rauchgase, die im Inneren der Wärmemantelrohre 7 strömen, Wärme wiederum im Gleichstrom und zwar von dem Strom der frisch zugeführten Rauchgase, die sich in der Strahlungskammer 8 befinden und die äußere Wand der Wärmemantelrohre 7 berühren. Wie dem Fachmann geläufig ist, läßt sich durch die Verwendung einer externen Brennereinrichtung 15 und die beschriebene Abgasrückführung gemäß der Erfindung der Wärmeaustausch der Katalysereaktion einfach über die Veränderung der Menge der Rauchgase, die zur adiabatischen Brennereinrichtung 15 zurückgeführt werden, regeln. Gleichzeitig wird der Durchmesser der Leitungen der Rauchgasableitung 9 so festgelegt, daß im Innern ein gezielter Druckverlust eintritt, der in allen Wärmemantelrohren 7 eine gleichmäßige Strömung der aus der Brennereinrichtung 15 kommenden Rauchgase garantiert. Darüber hinaus wird die gleichmäßige Füllung der Wärmemantelrohre 7 mit Rauchgas durch die Tatsache gewährleistet, daß die Verbrennung in der vorzugsweise adiabatischen Brennereinrichtung 15 mit einem Druck erfolgt, der praktisch dem Druck der Atmosphäre entspricht, so daß im Innern der Strahlungskammer 8 der Druck etwas geringer ist als der atmosphärische Druck, während mit der Absaugeinrichtung 22 ein Unterdruck im Innern der Wärmemantelrohre 7 erzeugt wird. Der Druck in den Wärmemantelrohren 7 ist geringer als in der Strahlungskammer 8.

Aufgrund des Dargelegten kann als wichtigste Funktion der Wärmemantelrohre 7 die Tatsache festgehalten werden, daß über sie die Menge der an die Prozeßgase zu Beginn des Reaktionsbereiches übertragenen Wärme erhöht wird, wobei ein von oben nach unten abnehmender und daher dem Wärmebedarf der Katalysereaktion entsprechender Wärmefluß erfolgt. Der Vorteil ist, daß mit den beschriebenen Eigenschaften und in Kombination mit einer geeigneten Auswahl der Durchmesser der Wärmemantelrohre 7 und des Verhältnisses zwischen der Länge des in die Strahlungskammer 8 eingeführten Teils der Wärmemantelrohre 7 und deren Gesamtlänge über die Wand der Reaktionsrohre 1 ein Wärmefluß an die Prozeßgase übertragen werden kann, bei dem die Temperatur des Katalysators während der gesamten Entwicklung des Reaktionsbereiches nahezu konstant bleibt.

## Patentansprüche

1. Verfahren zur Durchführung einer endothermen, insbesondere einer katalytischen Reaktion mit indirekter Beheizung eines Prozeßgasstroms in einem Reaktionsraum, bei dem der Prozeßgasstrom an einem Ende des Reaktionsraums eingeführt wird und den Reaktionsraum über dessen gesamte Länge durchströmt und bei dem die Wände des Reaktionsraums an ihrer Außenoberfläche von einem heißen Rauchgas umströmt werden, das durch die Wand des Reaktionsraums Wärme an den Prozeßgasstrom abgibt, wobei das bereits in Wärmeaustauschkontakt zum Prozeßgasstrom stehende Rauchgas während der Wärmeabgabe an den Prozeßgasstrom seinerseits zur Wärmeaufnahme mit dem durch eine Verbrennung entstandenen und frisch zugeführten heißen Rauchgas in indirekten Wärmeaustauschkontakt gebracht wird,
dadurch gekennzeichnet,
daß der Wärmeaustausch zwischen dem heißen Rauchgas und dem Prozeßgasstrom im Gleichstrom erfolgt und daß der Wärmeaustausch zwischen dem frisch zugeführten heißen Rauchgas und dem im Wärmeaustauschkontakt mit dem Prozeßgasstrom stehenden Rauchgas im Gleichstrom erfolgt.

2. Verfahren nach Anspruch 1,
dadurch gekennzeichnet,
daß der Prozeßgasstrom nach vollständigem oder nahezu vollständigem Abschluß der endothermen Reaktion als heißer Produktgasstrom im Gegenstrom mit dem frisch zugeführten Prozeßgasstrom in indirekten Wärmeaustauschkontakt gebracht wird.

3. Verfahren nach einem der Ansprüche 1 oder 2,
dadurch gekennzeichnet,
daß der Wärmeaustausch zwischen dem frisch zugeführten heißen Rauchgas und dem bereits im Wärmeaustauschkontakt mit dem Prozeßgasstrom stehenden Rauchgas nur auf einer im Bereich der Prozeßgaszuführung beginnenden Teillänge des Reaktionsraums stattfindet.

4. Verfahren nach Anspruch 3,
dadurch gekennzeichnet,
daß der indirekte Wärmeaustausch zwischen dem frisch zugeführten Rauchgas und dem mit dem Prozeßgasstrom bereits im Wärmeaustauschkontakt stehenden Rauchgas auf einer Teillänge von etwa 40 bis 85 %, insbesondere von 60 bis 80 % der Gesamtlänge des Reaktionsraums stattfindet.

5. Verfahren nach einem der Ansprüche 1 bis 4,
dadurch gekennzeichnet,
daß die Verbrennung zur Erzeugung des Rauchgases örtlich entfernt vom Bereich der stattfindenden Wärmeaustauschvorgänge erfolgt.

6. Verfahren nach einem der Ansprüche 1 bis 5,
dadurch gekennzeichnet,
daß die Verbrennung zur Erzeugung des Rauchgases als adiabatische Verbrennung stattfindet, insbesondere als Verbrennung bei einem gegenüber dem Umgebungsdruck etwas erhöhten Druck.

7. Verfahren nach einem der Ansprüche 1 bis 6,
dadurch gekennzeichnet,
daß das nach dem Wärmeaustausch mit dem Prozeßgasstrom abgekühlte Rauchgas bei etwa Umgebungsdruck abgesaugt und aus dem Verfahren ausgeschleust wird.

8. Verfahren nach Anspruch 7,
dadurch gekennzeichnet,
daß die Restwärme des abgekühlten Rauchgases vor seiner Ausschleusung zur Vorerwärmung des Prozeßgasstroms oder eines anderen Medienstroms in einer Konvektionszone genutzt wird.

9. Verfahren nach einem der Ansprüche 7 oder 8,
dadurch gekennzeichnet,
daß ein Teilstrom des abgesaugten Rauchgases in die Verbrennung zurückgeführt wird.

10. Reaktor zur Durchführung des Verfahrens nach Anspruch 1, mit mindestens einem vertikalen Reaktorrohr (1), dessen oberes Ende an eine Prozeßgaszuleitung (2) angeschlossen ist und das eine Produktableitung (3) aufweist, die derart angeordnet ist, daß die gesamte Länge des Reaktorrohres (1) vom Prozeßgas durchströmbar ist, wobei das Reaktorrohr (1) über im wesentlichen seine gesamte Länge unter Belassung eines ersten Ringspalts (10) mit Abstand von einem koaxial angeordneten Wärmemantelrohr (7) aus einem Material mit guter Wärmeleitfähigkeit umgeben ist, ferner mit einer aus Feuerfestmaterial gebildeten Strahlungskammer (8), die das Wärmemantelrohr (7) mindestens über eine Teillänge des Reaktorrohres (1) außen umgibt, wobei eine Heißgaszuleitung (12) für die Einleitung von heißem Rauchgas in die Strahlungskammer (8) an deren oberen Ende und eine Rauchgasableitung (9) aus der Strahlungskammer (8) vorgesehen sind,
dadurch gekennzeichnet,
daß die Rauchgasableitung (9) aus einer oder mehreren Leitungen gebildet ist, die jeweils am unteren Ende aus der Strahlungskammer (8) herausführen,
daß das Wärmemantelrohr (7) mit seinem oberen Ende an mindestens eine der Leitungen der Rauchgasableitung (9) angeschlossen ist und
daß das Wärmemantelrohr (7) an seinem unteren Ende einen Anschluß an eine Ableitung (11) für abgekühltes Rauchgas aufweist.

11. Reaktor nach Anspruch 10,
dadurch gekennzeichnet,
daß das mindestens eine Reaktorrohr (1) im Inneren ein Steigrohr (27) aufweist, das sich unter Belassung eines zweiten Ringspalts (6) zwischen Reaktorrohr (1) und Steigrohr (15) koaxial über im wesentlichen die gesamte Länge des Reaktorrohrs (1) erstreckt, in der Nähe des an seinem unteren Ende durch einen Boden dicht verschlossenen Reaktorrohres (1) mit Abstand von diesem Boden offen endet und in der Nähe des oberen Endes des Reaktorrohres (1) aus diesem herausgeführt ist (Produktableitung 3).

12. Reaktor nach Anspruch 11,
dadurch gekennzeichnet,
daß das mindestens eine Reaktorrohr (1) als Katalysatorrohr ausgebildet ist, wobei die Katalysatorfüllung im Bereich des zweiten Ringspalts (6) angeordnet ist.

13. Reaktor nach einem der Ansprüche 10 bis 12,
dadurch gekennzeichnet,
daß das Wärmemantelrohr (7) mit dem Reaktorrohr (1), insbesondere mit mindestens 15 % bis maximal 60 % seiner Länge, nach unten aus der Strahlungskammer (8) herausragt.

14. Reaktor nach einem der Ansprüche 10 bis 13,
dadurch gekennzeichnet,
daß eine außerhalb der Strahlungskammer (8) angeordnete Brennereinrichtung (15), insbesondere eine adiabatische Brennereinrichtung, vorgesehen ist, die eine Rauchgasableitung (21) aufweist, die an die Heißgaszuleitung (12) angeschlossen ist.

15. Reaktor nach Anspruch 14,
dadurch gekennzeichnet,
daß die Heißgaszuleitung (12) als Verteilkanal ausgebildet ist, der über eine Reihe von Düsen (13) zur gleichmäßigen Verteilung des heißen Rauchgases mit. dem Inneren der Strahlungskammer (8) verbunden ist.

16. Reaktor nach Anspruch 15,
dadurch gekennzeichnet,
daß der Verteilkanal Bestandteil der feuerfesten Wandung der Strahlungskammer (8) ist.

17. Reaktor nach einem der Ansprüche 10 bis 16,
dadurch gekennzeichnet,
daß mehrere parallel zueinander und im Abstand voneinander angeordnete Reaktorrohre (1) vorgesehen sind, die jeweils von einem Wärmemantelrohr (7) umgeben sind.

18. Reaktor nach Anspruch 17,
dadurch gekennzeichnet,
daß die Reaktorrohre (1) mit ihren Längsachsen in einer gemeinsamen Ebene (14) liegen und daß jeweils ein zu dieser Ebene spiegelsymmetrisch angeordnetes Paar von Leitungen der Rauchgasableitung (9) in die einzelnen Wärmemantelrohre (7) führt, wobei die Durchmesser der Leitungen der Rauchgasableitung (9) zur Erzielung einer gleichmäßigen Rauchgasströmung in allen Wärmemantelrohren (7) auf die Einstellung eines konzentrierten Druckverlustes ausgelegt sind.

19. Reaktor nach einem der Ansprüche 10 bis 18,
dadurch gekennzeichnet,
daß die Leitungen der Rauchgasableitung (9) außerhalb der Strahlungskammer (8) verlaufen.

20. Reaktor nach einem der Ansprüche 13 bis 19,
dadurch gekennzeichnet,
daß der Durchmesser und die Länge der Wärmemantelrohre (7) sowie deren innerhalb der Strahlungskammer (8) liegende Teillänge derart aufeinander abgestimmt sind, daß der durch die Wände der Reaktorrohre (1) übertragene Wärmestrom eine im wesentlichen konstante Temperatur im Reaktionsbereich des Prozeßgasstroms gewährleistet.

21. Reaktor nach einem der Ansprüche 14 bis 20,
dadurch gekennzeichnet,
daß an die Ableitungen (11) der Wärmemantelrohre (7) zum Absaugen des abgekühlten Rauchgases an eine Ventilationseinrichtung (22) angeschlossen sind, deren Ausgang sich in eine zu einem Kamin (26) führende Abgasableitung (25) und in eine Abgasrückführleitung (19) verzweigt, durch die eine Abgasteilmenge in die Brennereinrichtung (15) rückführbar ist.

22. Reaktor nach Anspruch 21,
dadurch gekennzeichnet,
daß zwischen den Ableitungen (11) und der Abgasableitung (25) ein Wärmetauscher als Konvektionszone (20) zur Vorwärmung des Prozeßgasstroms oder eines anderen Medienstroms eingeschaltet ist.

23. Reaktor nach einem der Ansprüche 14 bis 22,
dadurch gekennzeichnet,
daß die Brennereinrichtung (15) ein Gebläse (18) zum Einblasen der Verbrennungsluft aufweist.

24. Reaktor nach einem der Ansprüche 12 bis 23,
dadurch gekennzeichnet,
daß das obere Ende des als Katalysatorrohr ausgebildeten Reaktorrohrs (1) einen mit einem abnehmbaren Deckel (4) verschließbaren Flansch zum Einsetzen und Herausnehmen der Katalysatorfüllung aufweist.

## Claims

1. A process for performing an endothermic, in particular catalytic, reaction with indirect heating of a stream of process gas in a reaction chamber, in which the stream of process gas is introduced at one end of the reaction chamber and flows through the reaction chamber over the entire length thereof and in which a hot flue gas flows around the walls of the reaction chamber on their outer surface, which flue gas gives off heat to the stream of process gas through the wall of the reaction chamber, the flue gas which is already in heat-exchange contact with the stream of process gas, while it is giving off heat to the stream of process gas, in turn being brought into indirect heat-exchange contact with the hot flue gas, which has resulted from combustion and is freshly supplied, for heat uptake,
characterised in that
the heat exchange between the hot flue gas and the stream of process gas takes place in a co-current flow and that the heat exchange between the freshly supplied hot flue gas and the flue gas which is in heat-exchange contact with the stream of process gas takes place in a co-current flow.

2. A process according to Claim 1, characterised in that the stream of process gas once the endothermic reaction has been completed or virtually completed is brought into indirect heat-exchange contact as a hot stream of product gas with the freshly supplied stream of process gas in a counter-current flow.

3. A process according to one of Claims 1 or 2, characterised in that the heat exchange between the freshly supplied hot flue gas and the flue gas which is already in heat-exchange contact with the stream of process gas takes place only over a partial length of the reaction chamber beginning in the region of supply of the process gas.

4. A process according to Claim 3, characterised in that the indirect heat exchange between the freshly supplied flue gas and the flue gas which is already in heat-exchange contact with the stream of process gas takes place over a partial length of about 40 to 85%, in particular 60 to 80%, of the total length of the reaction chamber.

5. A process according to one of Claims 1 to 4, characterised in that the combustion to produce the flue gas takes place at a distance from the region of the heat-exchange operations which are taking place.

6. A process according to one of Claims 1 to 5, characterized in that the combustion to produce the flue gas takes place as adiabatic combustion, in particular as combustion at a pressure somewhat higher than the ambient pressure.

7. A process according to one of Claims 1 to 6, characterised in that the flue gas cooled after the heat exchange with the stream of process gas is extracted at about ambient pressure and is discharged from the process.

8. A process according to Claim 7, characterised in that the residual heat of the cooled flue gas before its discharge is used to preheat the stream of process gas or another stream of medium in a convection zone.

9. A process according to one of Claims 7 or 8, characterised in that a partial stream of the extracted flue gas is recycled into the combustion stage.

10. A reactor for performing the process according to Claim 1, having at least one vertical reactor pipe (1), the upper end of which is connected to a process gas feed line (2) and which has a product discharge line (3) which is arranged such that the process gas can flow through the entire length of the reactor pipe (1), the reactor pipe (1) being surrounded over substantially its entire length, leaving a first annular gap (10), at a distance by a coaxially arranged heating-jacket pipe (7) made of a material of good thermal conductivity, and furthermore having a radiation chamber (8) formed of refractory material, which chamber externally surrounds the heating-jacket pipe (7) at least over a partial length of the reactor pipe (1), with a hot gas feed line (12) for introducing hot flue gas into the radiation chamber (8) at the upper end thereof and a flue gas discharge line (9) leading out of the radiation chamber (8) being provided,
characterised in that
the flue gas discharge line (9) is formed of one or more lines which each lead out of the radiation chamber (8) at the lower end,
the heating-jacket pipe (7) is connected by its upper end to at least one of the lines of the flue gas discharge line (9) and
that the heating-jacket pipe (7) has a connection to a discharge line (11) for cooled flue gas at its lower end.

11. A reactor according to Claim 10, characterised in that the at least one reactor pipe (1) has in its interior a riser pipe (27) which extends coaxially over substantially the entire length of the reactor pipe (1), leaving a second annular gap (6) between the reactor pipe (1) and the riser pipe (15), ends open in the vicinity of the reactor pipe (1) sealed tight at its lower end by a bottom at a distance from this bottom and passes out of the reactor pipe (1) in the vicinity of the upper end thereof (product discharge line 3).

12. A reactor according to Claim 11, characterised in that the at least one reactor pipe (1) is in the form of a catalyst tube, the catalyst filling being located in the region of the second annular gap (6).

13. A reactor according to one of Claims 10 to 12, characterized in that the heating-jacket pipe (7) with the reactor pipe (1), in particular with at least 15% to at most 60% of its length, projects downwards out of the radiation chamber (8).

14. A reactor according to one of Claims 10 to 13, characterised in that a burner means (15) located outside the radiation chamber (8), in particular an adiabatic burner means, is provided which has a flue gas discharge line (21) which is connected to the hot gas feed line (12).

15. A reactor according to Claim 14, characterised in that the hot gas feed line (12) is in the form of a distribution channel which is connected, via a series of nozzles (13) for evenly distributing the hot flue gas, to the interior of the radiation chamber (8).

16. A reactor according to Claim 15, characterised in that the distribution channel is part of the refractory wall of the radiation chamber (8).

17. A reactor according to one of Claims 10 to 16, characterized in that a plurality of reactor pipes (1) arranged parallel to one another and spaced apart from each other is provided, which are each surrounded by a heating-jacket pipe (7).

18. A reactor according to Claim 17, characterised in that the reactor pipes (1) lie with their longitudinal axes in a common plane (14) and that in each case a pair of lines of the flue gas discharge line (9) which are arranged mirror-symmetrically to this plane lead into the individual heating-jacket pipes (7), the diameter of the lines of the flue gas discharge line (9) being designed for the setting of a concentrated pressure loss in order to achieve a uniform flow of flue gas in all the heating-jacket pipes (7).

19. A reactor according to one of Claims 10 to 18, characterised in that the lines of the flue gas discharge line (9) extend outside the radiation chamber (8).

20. A reactor according to one of Claims 13 to 19, characterised in that the diameter and the length of the heating-jacket pipes (7) and the partial length thereof which is located within the radiation chamber (8) are matched to one another such that the heat flow transmitted through the walls of the reactor pipes (1) ensures a substantially constant temperature in the reaction region of the stream of process gas.

21. A reactor according to one of Claims 14 to 20, characterized in that the discharge lines (11) of the heating-jacket pipes (7) for extracting the cooled flue gas are connected to a ventilation means (22), the outlet of which branches into a waste gas discharge line (25) leading to a chimney (26) and a waste gas return line (19) through which a partial portion of waste gas can be returned into the burner means (15).

22. A reactor according to Claim 21, characterised in that a heat exchanger is inserted between the discharge lines (11) and the waste gas discharge line (25) as a convection zone (20) for preheating the stream of process gas or another media stream.

23. A reactor according to one of Claims 14 to 22, characterized in that the burner means (15) has a fan (18) for blowing in the combustion air.

24. A reactor according to one of Claims 12 to 23, characterised in that the upper end of the reactor pipe (1) which is designed as a catalyst pipe has a flange which can be closed by a removable cover (4) for introducing and removing the catalyst filling.

## Revendications

1. Procédé pour effectuer une réaction endothermique, en particulier une réaction catalytique, avec chauffage indirect d'un courant de gaz de procédé dans un espace réactionnel, dans lequel le courant de gaz de procédé est introduit à une extrémité de l'espace réactionnel et traverse l'espace réactionnel sur toute sa longueur, et dans lequel les parois de l'espace réactionnel, sur leur surface externe, sont entourées par un gaz de fumée chaud y circulant, qui fournit de la chaleur au courant de gaz de procédé à travers la paroi de l'espace réactionnel, le gaz de fumée déjà en contact d'échange de chaleur par rapport au courant de gaz de procédé, pendant qu'il fournit de la chaleur au courant de gaz de procédé, étant amené, de son côté, en contact d'échange de chaleur indirect, pour recevoir de la chaleur, avec le gaz de fumée chaud fraîchement amené et créé par une combustion,
caractérisé en ce que l'échange de chaleur entre le gaz de fumée chaud et le courant de gaz de procédé est effectué suivant un écoulement de même sens, et en ce que l'échange de chaleur entre le gaz de fumée chaud fraîchement amené et le gaz de fumée en contact d'échange de chaleur avec le courant de gaz de procédé est effectué suivant un écoulement de même sens.

2. Procédé selon la revendication 1,
caractérisé en ce que le courant de gaz de procédé, après l'arrêt total ou pratiquement total de la réaction endothermique, est amené en contact d'échange de chaleur indirect, comme courant de gaz de produit chaud, à contre-courant, avec le courant de gaz de procédé fraîchement amené.

3. Procédé selon une des revendications 1 ou 2,
caractérisé en ce que l'échange de chaleur entre le gaz de fumée chaud fraîchement amené et le gaz de fumée déjà en contact d'échange thermique avec le courant de gaz de procédé n'a lieu que sur une longueur partielle de l'espace réactionnel, commençant dans la zone de l'amenée du gaz de procédé.

4. Procédé selon la revendication 3,
caractérisé en ce que l'échange de chaleur indirect entre le gaz de fumée fraîchement amené et le gaz de fumée déjà en contact d'échange de chaleur avec le courant de gaz de procédé a lieu sur une longueur partielle d'environ 40 à 85 %, en particulier de 60 à 80 %, de la longueur totale de l'espace réactionnel.

5. Procédé selon une des revendications 1 à 4,
caractérisé en ce que la combustion pour engendrer le gaz de fumée est effectuée de façon localement éloignée de la zone où se produisent les processus d'échange de chaleur.

6. Procédé selon une des revendications 1 à 5,
caractérisé en ce que la combustion pour engendrer le gaz de fumée a lieu comme combustion adiabatique, en particulier comme combustion pour une pression quelque peu augmentée par rapport à la pression de l'environnement.

7. Procédé selon une des revendications 1 à 6,
caractérisé en ce que le gaz de fumée refroidi après l'échange de chaleur avec le courant de gaz de procédé est aspiré à environ la pression de l'environnement et est isolé du procédé.

8. Procédé selon la revendication 7,
caractérisé en ce que la chaleur résiduelle du gaz de fumée refroidi, avant son isolation, est utilisée pour préchauffer le courant de gaz de procédé ou un autre courant de fluide dans une zone de convection.

9. Procédé selon une des revendications 7 ou 8,
caractérisé en ce qu'un courant partiel du gaz de fumée aspiré est ramené à la combustion.

10. Réacteur pour la mise en oeuvre du procédé selon la revendication 1, comprenant au moins un tube de réacteur vertical (1) dont l'extrémité supérieure est raccordée à un conduit d'amenée de gaz de procédé (2) et qui présente un conduit d'évacuation de produit (3) qui est agencé de sorte que la longueur totale du tube de réacteur (1) peut être traversée par le gaz de procédé, le tube de réacteur (1) étant entouré, sur sensiblement toute sa longueur, en laissant une première fente annulaire (10), à distance, par un tube d'enveloppe thermique (7) agencé coaxialement en une matière ayant une bonne conductibilité thermique, comportant de plus une chambre de rayonnement (8) formée en une matière réfractaire, qui entoure extérieurement le tube d'enveloppe thermique (7) au moins sur une longueur partielle du tube de réacteur (1), un conduit d'amenée de gaz chaud (12) pour l'introduction de gaz de fumée chaud dans la chambre de rayonnement (8) à son extrémité supérieure et un conduit d'évacuation de gaz de fumée (9) de la chambre de rayonnement (8) étant prévus,
caractérisé en ce que le conduit d'évacuation de gaz de fumée (9) est formé par un ou plusieurs conduits qui, à chaque fois, sortent, à l'extrémité inférieure, de la chambre de rayonnement (8), en ce que le tube d'enveloppe thermique (7), à son extrémité supérieure, est raccordé à au moins un des conduits du conduit d'évacuation de gaz de fumée (9), et en ce que le tube d'enveloppe thermique (7), à son extrémité inférieure, présente un raccord à un conduit d'évacuation (11) pour du gaz de fumée refroidi.

11. Réacteur selon la revendication 10,
caractérisé en ce que le tube de réacteur (1) présente, à l'intérieur de celui-ci, un tube montant (27), qui s'étend, en laissant une seconde fente annulaire (6), entre le tube de réacteur (1) et le tube montant (15), coaxialement, sur généralement toute la longueur du tube de réacteur (1), s'achève, en étant ouvert, à proximité du tube de réacteur (1) fermé de façon étanche à son extrémité inférieure par un fond à distance de ce fond, et, à proximité de l'extrémité supérieure du tube de réacteur (1), sort de celui-ci (conduit d'évacuation de produit 3).

12. Réacteur selon la revendication 11,
caractérisé en ce que le tube de réacteur (1) est réalisé comme tube de catalyseur, le remplissage de catalyseur étant prévu dans la zone de la seconde fente annulaire (6).

13. Réacteur selon une des revendications 10 à 12,
caractérisé en ce que le tube d'enveloppe thermique (7) avec le tube de réacteur (1), en particulier d'au moins 15 % à au plus 60 % de sa longueur, fait saillie vers le bas hors de la chambre de rayonnement (8).

14. Réacteur selon une des revendications 10 à 13,
caractérisé en ce qu'un dispositif de combustion (15) agencé à l'extérieur de la chambre de rayonnement (8), en particulier un dispositif de combustion adiabatique, est prévu, qui présente un conduit d'évacuation de gaz de fumée (21) qui est raccordé au conduit d'amenée de gaz chaud (12).

15. Réacteur selon la revendication 14,
caractérisé en ce que le conduit d'amenée de gaz chaud (12) est réalisé comme canal distributeur qui est relié à l'intérieur de la chambre de rayonnement (8) par l'intermédiaire d'une série de buses (13) pour la répartition uniforme du gaz de fumée chaud.

16. Réacteur selon la revendication 15,
caractérisé en ce que le canal distributeur fait partie de la paroi réfractaire de la chambre de rayonnement (8).

17. Réacteur selon une des revendications 10 à 16,
caractérisé en ce que plusieurs tubes de réacteur (1) agencés parallèlement les uns par rapport aux autres et à distance les uns des autres sont prévus, lesquels sont entourés, à chaque fois, par un tube d'enveloppe thermique (7).

18. Réacteur selon la revendication 17,
caractérisé en ce que les tubes de réacteur (1) se trouvent, par leurs axes longitudinaux, dans un plan commun (14), et en ce que; à chaque fois, une paire, agencée de façon symétrique à ce plan, de conduits du conduit d'évacuation de gaz de fumée (9) mène dans les tubes d'enveloppe thermique individuels (7), les diamètres des conduits du conduit d'évacuation de gaz de fumée (9) étant dimensionnés pour obtenir un écoulement uniforme du gaz de fumée dans tous les tubes d'enveloppe thermique (7) en fonction du réglage d'une perte de pression concentrée.

19. Réacteur selon une des revendications 10 à 18,
caractérisé en ce que les conduits du conduit d'évacuation de gaz de fumée (9) s'étendent à l'extérieur de la chambre de rayonnement (8).

20. Réacteur selon une des revendications 13 à 19,
caractérisé en ce que le diamètre et la longueur des tubes d'enveloppe thermique (7) ainsi que leur longueur partielle se trouvant à l'intérieur de la chambre de rayonnement (8) sont accordés les uns aux autres de sorte que le courant thermique traversant les parois des tubes de réacteur (1) garantit une température généralement constante dans la zone réactionnelle du courant de gaz de procédé.

21. Réacteur selon une des revendications 14 à 20,
caractérisé en ce que les conduits d'évacuation (11) des tubes d'enveloppe thermique (7) sont raccordés à un dispositif de ventilation (22) pour aspirer le gaz de fumée refroidi, dont la sortie se subdivise en un conduit d'évacuation de gaz d'échappement (25) menant à une cheminée (26) et en un conduit de retour de gaz d'échappement (19), à travers lequel une quantité partielle de gaz d'échappement peut être ramenée dans le dispositif de combustion (15).

22. Réacteur selon la revendication 21,
caractérisé en ce que, entre les conduits d'évacuation (11) et le conduit d'évacuation de gaz d'échappement (25), il est prévu un échangeur de chaleur comme zone de convection (20) pour préchauffer le courant de gaz de procédé ou un autre courant de fluide.

23. Réacteur selon une des revendications 14 à 22,
caractérisé en ce que le dispositif de combustion (15) présente une soufflante (18) pour souffler l'air de combustion.

24. Réacteur selon une des revendications 12 à 23,
caractérisé en ce que l'extrémité supérieure du tube de réacteur (1) réalisé comme tube de catalyseur présente un bord pouvant être fermé par un couvercle amovible (4) pour amener et évacuer le catalyseur.
